# EUROPEAN PATENT APPLICATION

(11) **EP 1 545 144 A1**
(43) Date of publication of application: **22.06.2005**
(21) Application number: 03104794.7
(22) Date of filing: 18.12.2003
(51) Int. Cl.: H04Q 7/38

(54) **Configuration method of a mobile terminal in multi-mode mobile communications systems**

(71) Applicant: Telefonaktiebolaget LM Ericsson (publ), 164 83 Stockholm (SE)
(72) Inventor: Signell, Svante, SE-162 46 Vällingby (SE); Frenger, Pal, SE-162 67 Vällingby (SE); Nyström, Johan, SE-112 33 Stockholm (SE)
(74) Representative: Stenborg, Anders Vilhelm

(57) **Abstract**

The invention relates to configuration of a mobile terminal (20) in a wireless communication system (100). A transmitter node (10) of a first communication system (100) broadcasts system configuration information on a logical channel located in different bands than the proper communication bands. The system configuration information comprises the frequency band and system type of a second communication system. After power on, a mobile terminal (20) scans a set of known candidate carriers for system configuration information. Based on this information, the mobile terminal (20) selects configuration settings and configures itself.

## Description

### TECHNICAL FIELD

The present invention generally relates to wireless communication networks and in particular to configuration of mobile terminals in such networks.

### BACKGROUND

The mobile telecommunications systems in the first, second and third generation of technologies constitute a global success story. The success is mainly due to advancements of technology, wisely chosen spectrum regulations and of course benefits for the end users. This has resulted in a large variety of mobile technologies and communication systems and often there are different communication systems available in different parts of the world.

In view of this, mobile terminals that can use several different communication protocols are desirable. Mobile terminals that are capable of configuring themselves for operating in more than one communication systems are known in the prior art. Solutions where mobile terminals download software that enables operation in different communication systems have also been proposed. In GB 2 294 844, for example, a programmable subscriber unit receives information about which communication systems that are available from a common communication system. The subscriber unit selects one of the communication systems and upon request receives programming for operating in that system from the common communication system. In accordance with US Patent 6,351,638, an external processing device is used to reduce the cost and complexity of such a subscriber unit.

Although the different mobile technologies are very different in capabilities and complexity, they share one important aspect. They are all designed to operate in a well-specified frequency spectrum stipulated by regulatory, often international, bodies. Another similarity between existing systems is that the spectrum is divided into pieces such that each operator (and the customers of the operator) has exclusive access to that piece of spectrum. Thus, today a multitude of wireless standards exists around the world, each with its own radio parameters. The operators are locked into certain spectrum regardless of actual need and each operator in general needs to build a separate network, which implies high total system costs.

As more and more new technologies are continuously evolving, there is an increasing need for spectrum, and will be even more so when next 'generations' of mobile systems are introduced since each new generation of mobile systems will typically need new spectrum. There is no way to gradually introduce new improved air interfaces without new spectrum. There will also be a huge variety of needs for data rates, delays, coverage and capacity.

A major problem hereby is that the overall spectrum is becoming more and more occupied, making it difficult to find new spectrum. Moreover, different geographical regions have different pieces of empty spectrum that can be used and the empty spectrum changes with time. Therefore, it will be practically impossible to make international agreements.

Accordingly, there is a considerable need for a mechanism that enables this complex situation to be handled in a satisfactory manner.

### SUMMARY

A general object of the present invention is to provide an improved method for configuration of mobile terminals in wireless communication systems. A specific object is to enable an increased degree of spectrum flexibility in wireless communication systems. Another object is to make it possible to use the same mobile terminal in different regions of the world even as the number of wireless standards increases.

These objects are achieved in accordance with the attached claims.

In different geographical regions different standards are used in different spectrum parts and it is difficult (sometimes even impossible) for a mobile terminal to know which and where. The configuration method of the present invention solves this problem by broadcasting overall system configuration information on well-defined system configuration channels. This information relates to at least one system other than the system transmitting it, but can also include configuration features of the transmitting system. The mobile terminal preferably scans a set of candidate channels for system configuration information in an initial phase when it is non-connected for uplink communication as well as later for update purposes. The mobile terminal can thereafter configure itself based on its built in capabilities and the broadcast information.

The proposed configuration method increases the flexibility of wireless communication systems and offers a number of advantages. For example, it allows:
- deployment in new bands or reuse of old bands;
- update of deployment of air interfaces in a gradual fashion in part of the band;
- cheap less capable mobile terminals as well as 'expensive' more capable ones;
- operation in paired (not necessarily of same bandwidth), unpaired and 'free usage' bands;
- operation in licensed as well as unlicensed bands;
- sharing of physical and spectrum resources between operators e.g. to reduce network costs; and/or
- restrictions of certain operational aspects (e.g. power) in certain spectrum bands.

According to other aspects of the invention a wireless unit, a transmitter node and a wireless communication system are provided.

### BRIEF DESCRIPTION OF THE DRAWINGS

The invention, together with further objects and advantages thereof, is best understood by reference to the following description and the accompanying drawings, in which:
- Fig. 1: is a schematic view of a basic communication system in accordance with an exemplary embodiment of the present invention;
- Fig. 2: shows a spectrum illustrating the principles of a system configuration information channel in accordance with a preferred embodiment of the present invention;
- Fig. 3A-D: are time vs. frequency diagrams illustrating some exemplary duplex and timing arrangements that are supported by embodiments of the present invention;
- Fig. 4A-B: are spectrums illustrating two example situations with a system configuration channel corresponding to the one in Fig. 2;
- Fig. 5: illustrates spectrum allocation messaging according to exemplary embodiments of the present invention; and
- Fig. 6: is a flow chart of a configuration method according to a preferred embodiment of the present invention.

### DETAILED DESCRIPTION

As described in the background section, today there are a multitude of wireless standards around the world, each associated with respective radio parameters (carrier frequency, carrier spacing, bandwidth), power classes, duplex methods (primarily time division duplex (TDD) and frequency division duplex (FDD)), and transmission cycles (continuous or non-continuous transmission).

The available pieces of spectrum are becoming narrower, which makes it difficult to find new spectrum and may lead to non-optimal operation. The need for more GSM spectrum has for example already necessitated operation in additional bands not initially intended for such operation (e.g. GSM 1800) besides the 900 MHz band. The complexity of the situation is increased due to the fact that the pieces of empty spectrum generally are dependent on geographical region as well as changing with time.

Thus, there is a need for a flexible system with a scalable and flexible air interface capable of handling varying access methods, frequency bands, duplex methods and carrier properties.

The present invention is based on the recognition that the above difficulties can be overcome if the wireless units receive appropriate information about the available communication systems depending on their respective current locations. With conventional network solutions, the mobile terminal would generally not know which systems that are available in a particular geographical region and how to access those. In theory, the mobile terminal could continuously scan all possible frequency bands, but that is far to time and power demanding for being practically feasible. A better way of obtaining this information is needed. A difficulty in connection with this is that the wireless unit would need to be aware of these things *before* proper communication takes place.

By means of the present invention a wireless unit can be provided with notification and update information of the current system configuration in an efficient manner irrespective of its current location. A flexible duplex and radio access configuration is achieved through broadcasting overall system configuration information (SCI) on a well-defined logical channel referred to as a SCI channel (SCICH). The wireless unit can read this channel in an initial phase when it is not yet connected for uplink communication and configure itself based on the broadcast information.

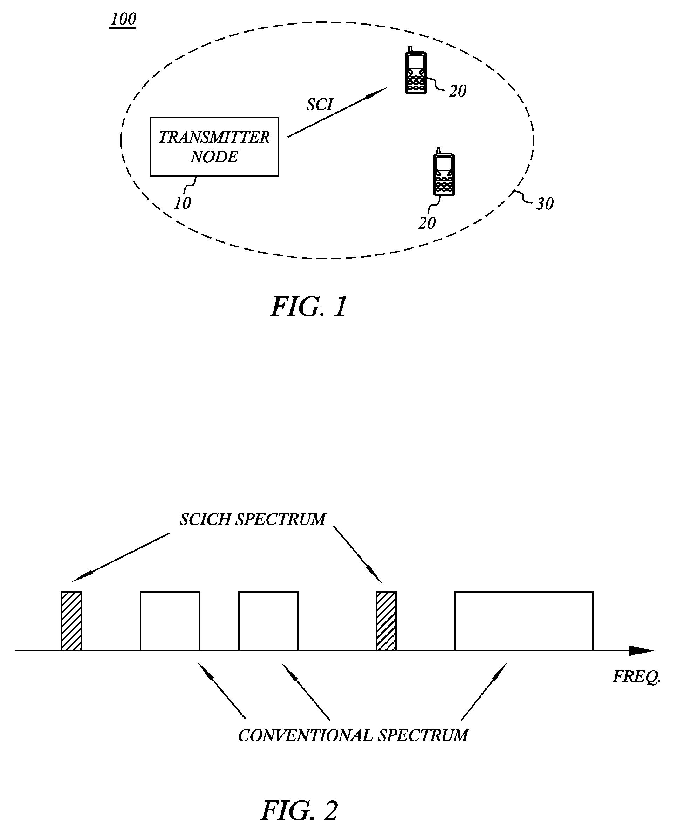

Fig. 1 is a schematic view of a basic communication system in accordance with an exemplary embodiment of the invention. The communication system 100 preferably covers a comparatively large geographical region and can for instance be a satellite network, a Digital Video Broadcasting (DVB) system, a Digital Audio Broadcasting (DAB) system, a Global System for Mobile communication (GSM) network, or another land-based network. The communication system 100 comprises a transmitter node 10, such as a satellite, a base station or another unit with the appropriate transmitting functionality. Wireless units 20 (also referred to as user equipment or mobile stations/nodes/terminals), represented by cellular phones, are also shown. The present invention can be applied in connection with any wireless unit that is associated with multiple configuration possibilities, i.e. capable of configuring itself for operation with different configuration settings. An example unit could be capable of communication based on GSM, WCDMA as well as one or more future generation communication protocol. The wireless unit can be partly or completely software defined.

The transmitter node 10 transmits system configuration information in a broadcast manner, i.e. for an unspecified, potentially unlimited number of receivers within its coverage area. In Fig. 1, there are two wireless units 20 present in the broadcast region 30 of the transmitter node, but only one of them listens to the transmitted information. The SCICH is preferably located in different bands than the proper communication bands, see Fig. 2. Features of this channel will be described in detail in the section "System configuration information channel". The broadcast information relates to at least one other system than the transmitting system 100, but may in some embodiments also include information about the communication system 100. Normally, information about system type, such as GSM or WCDMA, and one or more frequency bands for the respective system, e.g. specified through the respective carrier frequencies and bandwidths, is provided. Other information can also be broadcasted and this will be further described below in the section "System configuration information".

Turning to the wireless unit 20 (Fig. 1), it is provided with means for scanning the at least one predefined candidate carriers for the downlink SCICH. Based on the information on the SCICH ("what is allowed"), and the capabilities of the wireless unit ("what is possible"), the wireless unit selects configuration settings and then configures itself in accordance therewith. Generally, the wireless unit is capable of selecting which radio access method to use when provided with e.g. the basic carrier properties and duplex configuration. However, there are also embodiments where information used for this selection is included in the transmitted SCI.

A major benefit of the invention is that the wireless unit can receive SCI before being connected for proper communication, i.e. before any connection for uplink communication has been established. In a preferred embodiment, the wireless unit shortly after power on scans a set of predefined candidate carriers for the SCICH downlink channels. Alternatively, the wireless unit could remember the configuration settings of the previous power up, and try with those first. This means that the wireless unit after being powered up, scans a downlink channel (or several downlink channels) using the allowed configuration and carrier(s) that was used before power-on and that was stored in non-volatile memory. Only if the detection fails, for example if the wireless unit cannot detect a system according to the stored configuration, the SCICH is read.

For an initially non-connected wireless unit, the scanning, selecting and configuring procedure results in that a connection can be set up with at least one of the systems presented in the SCI (provided that the wireless unit has the right capabilities). However, SCICH is always there for the 'latest' news and the wireless unit preferably repeats the scanning procedure to update the configuring information even after a connection has been established. This can occur at regular time intervals or occasionally, e.g. when the wireless unit has reasons to expect that new system configuration information is present. In this case, the scanning, selecting and configuring procedure can e.g. result in that the wireless unit establishes a new connection with another system or changes configuration settings for obtaining more efficient communication with its current system.

The wireless unit generally reads the system configuration information on the SCICH on its own initiative, in connection with power on as well as for subsequent updates. However, there may also be cases where the wireless unit is instructed to read the SCICH for example by an operator whose spectrum has changed.

In some embodiments, there is a message broadcasted in the downlink spectrum of the second communication system, indicating to all terminals listening that there is new information to be read in the SCICH channel. The message can e.g. comprise a simple flag signal. This allows slowly changing but critical system configuration information to be conveyed to newcomers as well as to wireless units already connected for operation in the second communication system. For example, notifications telling that a TDD carrier changes uplink/downlink asymmetry or that a TDD carrier is reconfigured to FDD DL only can be provided.

The invention thus allows wireless units to be notified of basic system parameters. Knowledge about spectrum usage does not have to be built into the mobile terminal, but can be received over the air interface. This results in a considerably enhanced flexibility regarding spectrum usage in wireless communication. The definitions of allowable frequencies and allowed technologies in these frequencies are allowed to change over time, which leads to a more efficient spectrum utilization. It will for example be straightforward to add new dedicated DL spectrum or unpaired bands and let this info be incorporated on the SCICH. Gradually, wireless units capable of using these bands will appear and off-load the 'old' bands as they migrate to the new bands.

Through fast spectrum changes, it may even be possible to use systems that are not always available, like military communication systems. Furthermore, the invention allows frequency bands to be shared between operators, e.g. such that one operator has access to a particular band at daytime, while the same band is used by another operator at nighttime. It also makes it possible to utilize frequency bands composed of multiple comparatively small separate pieces of spectrum.

In a preferred embodiment, only the format and possible frequency locations of the SCICH channel need to be agreed upon internationally. The rest is conveyed on SCICH and can essentially be determined by the regulators on a national basis. This constitutes a major advantage of the present invention.

Another aspect of the invention is that the complex and tedious search procedure that a self-configurable mobile terminal today would have to perform before establishing a connection, is reduced to a very quick and less power-demanding search. Through the system configuration information, the mobile terminal is told where to look, whereupon it does not have to scan all frequency bands.

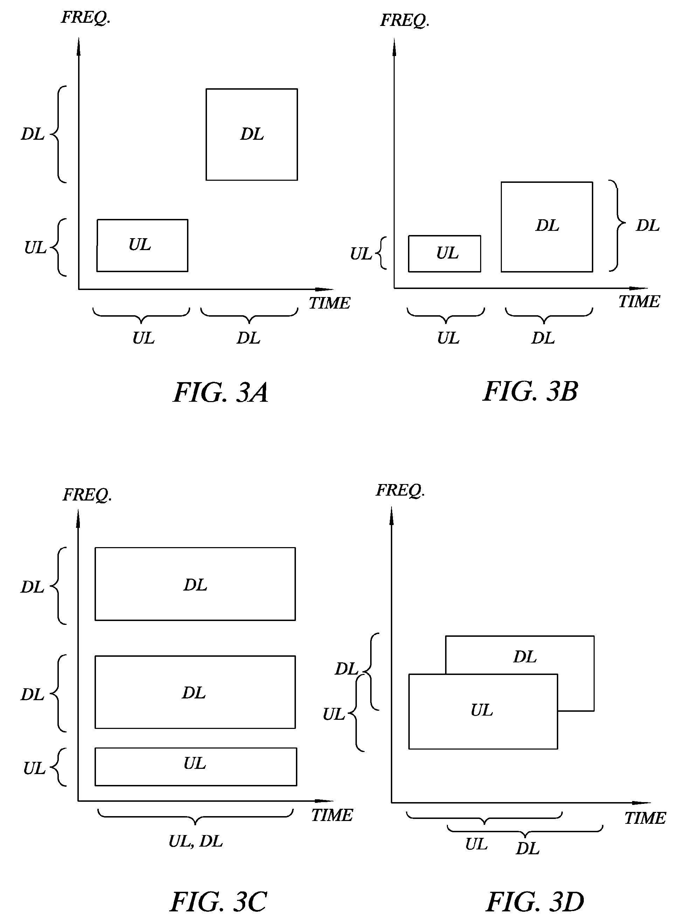

An advantageous feature of the present invention is that configuration of user equipment with regard to duplex and/or timing arrangements are possible. Fig. 3A-D are time vs. frequency diagrams illustrating some exemplary duplex and timing arrangements that can be supported by means of the invention. The respective diagrams show frequency/time usage for a connection between two units, for example between a base station (or another transmitting device) and a user equipment or between two user equipments.

In Fig. 3A, there are separate uplink (UL) and downlink (DL) carriers and separate UL and DL transmissions. Fig. 3B, on the other hand, illustrates a situation where the UL and DL carriers are at least partly overlapping. The UL and DL transmissions are non-overlapping. In Fig. 3C, there are instead separate UL and DL carriers but overlapping UL and DL transmissions. The figure also illustrates that more DL carriers than UL carriers (or vice versa) can be used. In the future, UL and DL might even overlap (wholly or partly) in both the time and frequency domain provided that the links are separated e.g. by means of echo canceling in the receivers or code division. This is illustrated in Fig. 3D.

The radio access methods used for the UL and DL can comprise TDMA, CDMA, FDMA, OFDMA, IFDMA components or combinations thereof, or any other access method, and can be different in the UL or DL or even be configurable via a wireless channel. The same holds for coding and modulation schemes.

Fig. 3A-D are merely examples and variants and combinations thereof are also possible. The UL/DL bands and/or UL/DL transmissions can be of equal or different size. Moreover, the pictures show transmission bands (or times) as continuous blocks, but UL/DL time slots are in practice often interleaved. Even the UL/DL frequency bands may be interleaved. Guard times and/or guard bands may be needed and included in the system configuration information transmitted in accordance with the invention.

### System configuration information channel

Returning to the frequency diagram of Fig. 2, the principles of a preferred system configuration information channel SCICH according to the invention will now be further described.

As mentioned, the SCICH channel is of a broadcast nature. The SCI can for instance reside in a broadcast like channel from a satellite or a land-based network. The logical SCICH channel comprises one or more physical channels, which preferably are located in different bands than the proper communication bands. This is illustrated in Fig. 2, where an exemplary SCICH channel composed of two separate frequency bands is shown. Preferably, the number of predefined physical channels is comparatively small and the SCI can be transferred on a subset or on all of these channels. The SCICH spectrum is typically much smaller than the conventional spectrum used for proper communication.

The modulation format is preferably designed for large coverage, i.e. low frequency for wireless communication, and for simple user equipment receiver, e.g. omni-antenna, BPSK/QPSK modulation. The amount of SCI information would normally be rather modest and the SCICH can hence with advantage be designed for low to intermediate data rates.

The format and possible frequency locations of the SCICH channel will preferably be agreed upon internationally. The logical channel SCICH can then be found by a wireless unit irrespective of its current geographical position. The wireless unit reads SCICH by scanning a set of possible known potential physical channels (bands/slots).

The signaling flow on the SCICH channel is preferably a unidirectional downlink flow. The broadcast information on the SCICH channel can be read by an arbitrary number of users and the information generally applies to any mobile terminal and is not terminal-specific.

The SCICH channels can be transmitted in carriers separate from the channels that convey traffic or be embedded onto such traffic channels. The SCICH may also use existing broadcast channels, such as conventional acquisition or broadcast channels or other cell-covering downlink channels, in case such channels are present in the transmitting communication system.

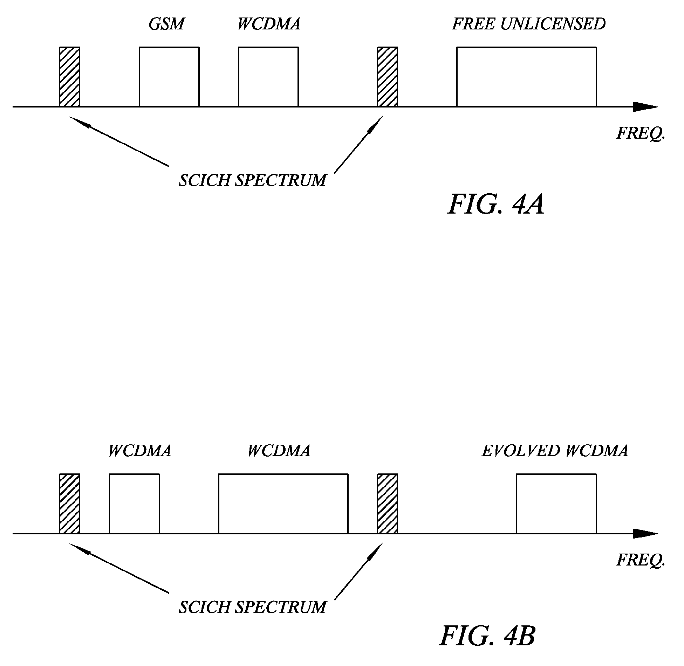

The nature of the preferred system configuration channel is further illustrated by Fig. 4A and 4B. Fig. 4A illustrates spectrum allocation in a first situation, where the conventional spectrum comprises a GSM band, a WCDMA band, and a free unlicensed frequency band. There is also a SCICH channel that corresponds to the one in Fig. 2. Fig. 4B shows the same frequency range in a second situation, for example in another geographical region or in the same region but at another point of time. Here, there are two separate frequency bands for WCDMA and one frequency band for an evolved WCDMA system type. The SCICH bands are the same as before. The number of frequency bands, their sizes and allowed systems in the respective bands can change with time and/or geography, but the SCICH bands will be the same for a comparatively long period of time. Through the information on the predefined SCICH bands, the wireless unit is informed about the current spectrum situation and can find possible/appropriate system(s) to use.

### System configuration information

The system configuration information SCI generally comprises indications of at least a subset of the currently available systems in a current geographic region and how these systems can be accessed. Basic system information telling the wireless unit what is allowed is normally included but the SCI can also comprise non-compulsory recommendations. The information relates to the overall radio situation and normally comprises details about at least two different systems. The system type (defined based on technology e.g. GSM, WCDMA, etc.) and frequency band of the communication systems are typical minimum SCI data records.

The system configuration information is preferably specific for a current geographical region of the wireless unit in the sense that different information is provided in different parts of the world (countries, continents and/or other regions). However, it should be noted that a wireless unit can sometimes be reached by information related to another geographical region as well, for instance when it is located close to national borders.

As mentioned, the broadcast information relates to at least one other system that the transmitting system, but information of the broadcasting system may also be included. The latter can e.g. comprise information about the total currently available bandwidth of the system, enabling a more efficient spectrum utilization, as well as operator-related information enabling adaptive spectrum allocation between operators.

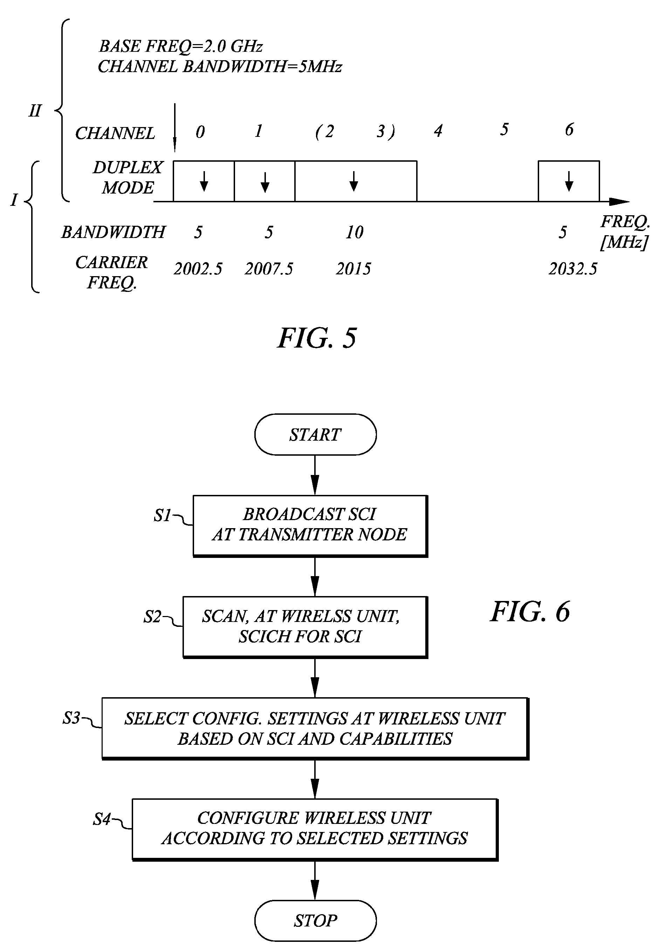

In some basic embodiments, system information about frequency band and duplex method is transmitted. This information could be formatted in several ways. Two exemplary spectrum allocation messaging solutions, (I) and (II), respectively, are illustrated in Fig. 5. For simplicity, only the FDD downlink part is shown.

In the first example (I), the SCI comprises a list of data records, each containing information of carrier frequency, carrier spacing, and duplex method. The list could e.g. look like this:
*2002.5 MHz, 5 MHz, FDD DL*
*2007*.*5 MHz, 5 MHz, FDD DL*
*2015 MHz, 10 MHz, FDD DL*
*2032*.*5 MHz, 5 MHz, FDD DL*
*2110 MHz*, *20MHz*, *TDD*
Note that a 10 MHz channel is defined (2010 - 2020 MHz).

According to the second example (II), two types of data record lists are provided. The first contains data records with respective base frequencies and channel bandwidth (BW) sizes, whereas the second contains data records with respective intervals of channel numbers and duplex methods associated with the respective intervals. The above configuration would then be expressed in this way:
*Base frequency=2.0 GHz, Channel BW=5 MHz*
*Channel 1: FDD DL*
*Channel 2-3: FDD DL*
*Channel 6: FDD DL*
*Channel 0: FDD DL*
*Base frequency=2.1 GHz*, *Channel BW=20 MHz*
*Channel 0: TDD*
Here the 10 MHz channel is defined through an interval (channel 2-3).

Irrespective of which of the above methods are used any frequency intervals can be listed with any resolution. The list could even contain overlapping records. For example, a piece of 20 MHz could be allowed for one 20 MHz carrier, two 10 MHz carriers or four 5 MHz carriers. Even the duplex method could be overlapped. The duplex method in the sub band could specify FDD DL, FDD UL, TDD (even potential asymmetry between UL/DL) or even allow simultaneous transmission/reception or information related to relaying.

As will be evident to a skilled person, there are several equivalent ways of specifying the above bands. Those also lie within the scope of the present invention.

In some cases, specifying the spectrum channels and bandwidths is not sufficient. For best operation in many countries, with many potential technologies and many different potential adjacent band systems, the wireless unit needs more information before setting up a connection. Some parameters that can be added to the sub band definitions will now be described.

It can often be preferred to specify some or all technologies, such as GSM/EDGE, 802.11b, WCDMA, that may be used in a particular sub band. The wireless unit knows its own capabilities and can decide if the band is useful. Phasing-in of new technologies in the band and phasing-out of older ones can then be made gradually over a set of bands e.g. based on the corresponding customer base.

Other parameters can relate to power restrictions, e.g. in order to manage possible interference to neighboring bands, and access limitations. The access limitations can for instance be expressed through a list of operators whose customers that have access to the band. This either implies that sharing of bands between operators is possible, or forbidden if the regulator decides so. Parameters can also indicate whether a mode of operation is unlicensed or not.

The SCI can thus include *system information*, such as channels including paging channel(s), frequencies and parameters for these. Information related to frequency and/or timing arrangements are generally needed, for example information of available carrier frequencies and their respective available bandwidths, duplex arrangements (FDD, TDD, CDD, SDD, etc.) and timing arrangements (when to transmit/receive). Information about available multi carrier arrangements can also be provided. The SCI can also comprise information about traffic types on the corresponding radio resource (real time, non real time, QoS, delay capabilities, packet switched or circuit switched, etc.).

The SCI can further relate to *core network* information, such as operator list, operator access information; *cell selection information*, such as neighboring cell list, parameters for cell selection etc; and/or *geographic information*, e.g. service areas of different systems or exact locations of the base stations and hotspots. The latter can e.g. involve a GPS receiver in the wireless unit and the geographic information may be displayed as a map at the wireless unit.

In some advantageous embodiments of the invention, the SCI includes rules/restrictions for the system, such as *etiquette rules* for using available resources (e.g. operators, power classes, capability classes, and/or behavior in unlicensed part). Allowed technologies (for a sub band), power restrictions (perhaps in order to manage interference to neighboring bands) and access limitations (list of operators whose customers that have access to this band) can be included. The power restrictions can for instance state that a particular system can only be run on low powers in a particular frequency band.

Finally, there may be SCI related to some available layer 1 parameters associated with the resources, for example small/large cells or hi/lo rates like: antenna configuration, pilot signal structure, chip rate, spreading factors, slot size, and guard spaces. In particular, information about allowed pilot structures can with advantage be transmitted on SCICH.

The SCI format and interpretation should preferably be such that the wireless unit can simply discard information it cannot interpret, for example the occurrence of a new technology that did not exist when the user equipment was manufactured. In that case, user equipment will be able to read the format even in the distant future.

A flow chart summarizing a preferred configuration method according to the invention is shown in Fig. 6. In a first step S1, a transmitter node of a first communication system broadcasts system configuration information related to a second communication system (and possibly also to the first communication system) on a SCICH channel. The SCICH is a downlink channel initiated by the first communication system itself that preferably is associated with at least one dedicated frequency communication band. A self-configurable wireless unit, e.g. a cellular phone or a laptop computer, within the coverage area of the transmitter node scans predefined channel(s) for system configuration information in step S2. Based on the broadcasted configuration information, which is preferably specific for a current or closely located (neighboring) geographical region of the wireless unit, the wireless unit selects configuration settings in step S3. Hereby, a comparison with the capabilities of the wireless unit is preferably performed. In final step S4, the wireless unit configures itself according to the selected configuration settings, e.g. for operation in the second communication system.

Although the invention has been described with reference to specific illustrated embodiments, it should be emphasized that it also covers equivalents to the disclosed features, as well as modifications and variants obvious to a person skilled in the art. Thus, the scope of the invention is only limited by the enclosed claims.

## Claims

1. A configuration method involving a first wireless communication system (100) including a transmitter node (10), comprising the steps of
broadcasting system configuration information related to a second wireless communication system from the transmitter node;
receiving, at a wireless unit (20) associated with multiple configuration possibilities, the system configuration information;
selecting, at the wireless unit, configuration settings based on the system configuration information; and
configuring the wireless unit in accordance with the selected configuration settings.

2. The method of claim 1, wherein the broadcasting step comprises the step of transmitting the system configuration information over a predefined system configuration information channel associated with at least one dedicated frequency communication band.

3. The method of claim 1, wherein the system configuration information is specific for a current or neighboring geographical region of the wireless unit (20).

4. The method of claim 1, wherein the system configuration information comprises information about a type of system and a frequency band of the second communication system.

5. The method of claim 1, wherein the broadcasting step also involves system configuration information related to the first communication system (100).

6. The method of claim 2, wherein the wireless unit (20) is initially not connected for uplink communication, and the receiving step involves scanning, at the wireless unit, the predefined system configuration information channel for system configuration information in connection with powering up the wireless unit.

7. The method of claim 6, wherein the scanning step is performed after powering up the wireless unit (20) and trying previously used configuration settings.

8. The method of claim 2, wherein the receiving step involves the step of repeatedly scanning, at the wireless unit (20), the predefined system configuration information channel for update purposes.

9. The method of claim 1, further comprising the step of broadcasting, within the second communication system, a notification of new system configuration information.

10. The method of claim 1, wherein the selecting step comprises comparing the system configuration information with configuration capabilities of the wireless unit (20).

11. The method of claim 1, wherein the system configuration information is related to at least one item selected from the group of: core network information, cell selection information, system information, geographic information, etiquette rules, allowed technologies, power restrictions, allowed pilot structures, and access limitations.

12. The method of claim 11, wherein the system configuration information is related to at least one item selected from the group of: channels, carrier frequency, carrier bandwidth, carrier spacing, duplex method, transmission timing structure, multi carrier arrangements, and traffic types.

13. The method of claim 1, wherein the first communication system (100) is selected from the group of: a satellite network, a land-based network, a Digital Video Broadcasting (DVB) system, a Digital Audio Broadcasting (DAB) system, and a Global System for Mobile communication (GSM) network.

14. A wireless unit (20) associated with multiple configuration possibilities, comprising
means for scanning a predefined system configuration information channel for system configuration information broadcasted from a transmitter node (10) of a first wireless communication system (100), said system configuration information being related to a second wireless communication system;
means for selecting configuration settings based on the system configuration information; and
means for configuring itself in accordance with the selected configuration settings.

15. The wireless unit of claim 14, wherein the predefined system configuration information channel is associated with at least one dedicated frequency communication band.

16. The wireless unit of claim 14, wherein the system configuration information is specific for a current or neighboring geographical region thereof.

17. The wireless unit of claim 14, wherein the system configuration information is related to a type of system and a frequency band of the second communication system.

18. The wireless unit of claim 14, wherein the system configuration information is related also to the first communication system (100).

19. The wireless unit of claim 14, comprising means for scanning the predefined system configuration information channel for system configuration information in connection with powering up the previously not uplink connected wireless unit.

20. The wireless unit of claim 19, further comprising means for trying previously used configuration settings before scanning the predefined system configuration information channel.

21. The wireless unit of claim 14, comprising means for repeatedly scanning the predefined system configuration information channel for update purposes.

22. The wireless unit of claim 14, wherein the means for selecting comprises means for comparing the system configuration information with the configuration capabilities of the wireless unit.

23. A transmitter node (10) of a first wireless communication system (100) with configuration means, comprising
means for broadcasting system configuration information related to a second wireless communication system, said system configuration information being intended for configuration of wireless units (20) within the coverage region of the transmitter node.

24. The transmitter node of claim 23, comprising means for transmitting the system configuration information over a predefined system configuration information channel associated with at least one dedicated frequency communication band.

25. The transmitter node of claim 23, wherein the system configuration information is related to a type of system and a frequency band of the second communication system.

26. The transmitter node of claim 23, further comprising means for broadcasting system configuration information related to the first communication system (100).

27. A wireless communication system (100) including a transmitter node (10) with configuration means, comprising
means for broadcasting, from the transmitter node, system configuration information related to another wireless communication system, said system configuration information being intended for configuration of wireless units (20) within the coverage region of the transmitter node.

28. The communication system of claim 27, wherein the means for broadcasting comprises means for transmitting the system configuration information over a predefined system configuration information channel associated with at least one dedicated frequency communication band.

29. The communication system of claim 27, being selected from the group of: a satellite network, a land-based network, a Digital Video Broadcasting (DVB) system, a Digital Audio Broadcasting (DAB) system, and a Global System for Mobile communication (GSM) network.
